# EUROPEAN PATENT APPLICATION

(11) **EP 4 694 101 A1**
(43) Date of publication of application: **11.02.2026**
(21) Application number: 24791742.0
(22) Date of filing: 28.02.2024
(51) Int. Cl.: H04M 1/03

(54) **ELECTRONIC DEVICE AND COVER**

(30) Priority: 21.04.2023 CN 202310471156
(71) Applicant: Huawei Technologies Co., Ltd., Shenzhen, Guangdong 518129 (CN)
(72) Inventor: ZHANG, Meng, Shenzhen, Guangdong 518129 (CN); HUANG, Qinhuan, Shenzhen, Guangdong 518129 (CN); ZHANG, Xin, Shenzhen, Guangdong 518129 (CN)
(74) Representative: Maiwald GmbH
(86) International application number: PCT/CN2024/079058
(87) International publication number: WO 2024/217154

(57) **Abstract**

This application relates to the field of terminal technologies, and discloses an electronic device and a cover. The electronic device includes a cover, a display component, and a main body. The cover is configured to block a gap between the display component and the main body. The cover includes a first portion and a second portion that are connected. The first portion covers at least a part of an edge of the display component. The second portion extends from the first portion to the main body. The main body internally includes a sound cavity, and a sound output channel that connects the sound cavity and the outside of the mobile phone is provided on the cover and/or the main body. An area of an orthographic projection of a sound outlet of the sound output channel on a side projection surface is greater than 0. The side projection surface is perpendicular to a plane on which the display component is located, and is parallel to an edge that is of the display component and that corresponds to the sound output channel. Neither the sound output channel nor an internal component of the foregoing electronic device is visible from a front view, improving aesthetic appeal. In addition, dimensional space of the display component can be increased, thereby enhancing efficient space utilization of the electronic device.

## Description

This application claims priority to Chinese Patent Application No. 202310471156.7, filed with the China National Intellectual Property Administration on April 21, 2023 and entitled "ELECTRONIC DEVICE AND COVER", which is incorporated herein by reference in its entirety.

### TECHNICAL FIELD

This application relates to the terminal field, and in particular, to an electronic device and a cover.

### BACKGROUND

Currently, a user has an increasingly high requirement for aesthetics of an electronic device. In some technical solutions, a gap is formed between a main body and a display component in an electronic device, and a cover is usually disposed to block the gap.

In addition, a sound cavity is formed in the main body of the electronic device. To implement an audio playing function of the electronic device, a sound output channel that connects the sound cavity to the outside of the electronic device further needs to be provided on the electronic device. However, when the sound output channel is provided on the main body, mechanical performance of the main body is affected. Therefore, how to provide a sound output channel on an electronic device becomes an urgent problem to be resolved in the field of electronic device technologies.

### SUMMARY

In view of this, embodiments of this application provide an electronic device and a cover. The electronic device includes a cover, a display component, and a main body, and the cover includes a first portion and a second portion that are connected. The display component is supported on the main body, and a gap is formed. The cover is configured to block the gap. The first portion covers at least a part of an edge of the display component. The second portion is formed by extending from the first portion toward the main body, and can be mounted on the main body through the gap. The main body internally includes a sound cavity, and a sound output channel that connects the sound cavity and the outside of the electronic device is provided on the cover and/or the main body. An area of an orthographic projection of a sound outlet of the sound output channel on a side projection surface is greater than 0. The side projection surface is perpendicular to a plane on which the display component is located, and is parallel to an edge that is of the display component and that corresponds to the sound output channel. For the foregoing electronic device, when a user looks at the electronic device from a side on which the display component is located, the sound output channel or another internal component are invisible, improving aesthetic appeal. In addition, mechanical performance of the cover does not need to be ensured by increasing a size of the first portion. Therefore, dimensional space of the display component can be increased, thereby enhancing efficient space utilization of the electronic device.

A first aspect of this application provides an electronic device. The electronic device includes a main body, a display component, and a cover, and a plane on which the display component is located is a first projection surface. The main body includes a support surface, and the display component is supported on the support surface of the main body. The cover includes a first portion and a second portion connected to the first portion. The first portion covers at least a part of an edge of the display component, and an orthographic projection of the first portion on the first projection surface at least partially overlaps an orthographic projection of the edge of the display component on the first projection surface. The second portion is formed by extending from the first portion in a direction pointing to the main body, and is connected to the main body. The main body internally includes a sound cavity, and a sound output channel is enclosed by the cover and/or the main body. A sound outlet of the sound output channel communicates with the outside of the electronic device, and a sound inlet of the sound output channel communicates with the sound cavity. In addition, an area of an orthographic projection of the sound outlet of the sound output channel on a second projection surface is greater than 0. The second projection surface is perpendicular to the first projection surface, and is parallel to an edge that is of the display component and that corresponds to the sound outlet of the sound output channel.

The electronic device includes but is not limited to any one of electronic products such as a mobile phone, a tablet computer, a notebook computer, an in-vehicle computer, an e-reader, and a wearable electronic device. The gap formed between the display component and the main body is a gap between the display component and the main body that is seen by a user when the user looks at the electronic device from a side on which the display component is located.

For the foregoing electronic device, when the user looks at the electronic device from the side on which the display component is located, the sound output channel or another internal component is invisible, improving aesthetic appeal. In addition, mechanical performance of the cover does not need to be ensured by increasing a size of the first portion. Therefore, dimensional space of the display component can be increased, enhancing efficient space utilization of the electronic device.

In some possible implementations of the first aspect, a ratio of an area of an orthographic projection of the sound outlet of the sound output channel on the first projection surface to the area of the orthographic projection of the sound outlet of the sound output channel on the second projection surface is a front-lateral proportion parameter, and the front-lateral proportion parameter is less than or equal to 1. That is, the area of the orthographic projection of the sound outlet of the sound output channel on the first projection surface is greater than the area of the orthographic projection of the sound outlet of the sound output channel on the second projection surface.

For example, the front-lateral proportion parameter may be at least one of 0, 0.05, 0.1, 0.15, 0.2, 0.25, 0.3, 0.35, 0.4, 0.45, 0.5, 0.55, 0.6, 0.65, 0.7, 0.75, 0.8, 0.85, 0.9, 0.95, and 1.0.

In the foregoing electronic device, the area of the orthographic projection of the sound outlet of the sound output channel on the first projection surface is greater than the area of the orthographic projection of the sound outlet of the sound output channel on the second projection surface, thereby weakening a visual effect of the sound outlet of the sound output channel on a front side, and further improving aesthetic appeal of the electronic device.

In some possible implementations of the first aspect, the sound outlet of the sound output channel is provided on the cover and the main body. That is, the sound outlet of the sound output channel is jointly enclosed by the cover and the main body.

For example, a first sound output notch is provided on the cover, and the first sound output notch and a surface of the main body jointly form the sound outlet of the sound output channel. For another example, a second sound output notch is provided on the main body, and the second sound output notch and a surface of the cover jointly form the sound outlet of the sound output channel. For another example, a first sound output notch is provided on the cover, a second sound output notch is provided on the main body, and the first sound output notch and the second sound output notch jointly form the sound outlet of the sound output channel.

For the foregoing electronic device, the sound outlet of the sound output channel can be formed only by providing a notch on the cover and/or the main body. Therefore, overall processing difficulty is low, a small-sized structure is avoided between the cover and the main body, and structural strength of the cover and the main body is improved. In addition, for a technology in which the first sound output notch is provided on the cover and the first sound output notch and the surface of the main body jointly form the sound outlet of the sound output channel, only a notch needs to be provided on the cover, and no notch or hole needs to be added on the main body. Therefore, mechanical performance of the main body can be further ensured, and overall strength of the electronic device can be improved.

In some possible implementations of the first aspect, the sound output channel includes a first sound output subchannel, the second portion includes a first side plate, the first side plate is provided with a first through hole, the first through hole communicates with the sound cavity, and the first through hole forms the first sound output subchannel.

In the foregoing electronic device, a sound inlet of the first sound output subchannel communicates with the sound cavity, and the first sound output subchannel is provided on the first side plate in the second portion. In other words, the sound inlet of the first sound output subchannel is provided on a surface of the first side plate, to ensure that the sound inlet of the first sound output subchannel communicates with the sound cavity when the mobile phone is switched between a folded state, a flattened state, and an intermediate state. Therefore, it is convenient to ensure that a speaker module of the electronic device can work normally in each state.

In some possible implementations of the first aspect, the sound output channel further includes a second sound output subchannel, and the second sound output subchannel communicates with the first sound output subchannel. The display component is located on one side of the first side plate in a first direction, and the first direction is parallel to the first projection surface. The main body includes a second side plate, and the second side plate is located on the other side of the first side plate in the first direction. A gap is formed between the first side plate and the second side plate, and the gap forms the second sound output subchannel. In addition, the second side plate blocks a sound outlet of the first sound output subchannel in the first direction.

In some possible implementations of this application, the main body includes a middle frame, and the middle frame includes a second side plate. A gap is formed between the second side plate and the screen display component, and the cover can be configured to block the gap between the second side plate and the screen display component. The second side plate is located on the other side of the first side plate in the first direction. A gap is formed between the first side plate and the second side plate, and the gap forms the second sound output subchannel. In addition, the second side plate blocks a sound outlet of the first sound output subchannel in the first direction.

In the electronic device, the second sound output subchannel communicating with the first sound output subchannel is the gap between the first side plate in the second portion and the second side plate in the main body. A processing process of the second sound output subchannel is simple, and production costs are reduced.

In some possible implementations of this application, a projection of a sound outlet of the second sound output subchannel toward the first sound output subchannel is located on a channel surface of the first sound output subchannel and/or a channel surface of the second sound output subchannel.

For the foregoing electronic device, when looking inside the electronic device, the user can only see the channel surface of the first sound output subchannel and/or the channel surface of the second sound output subchannel, but not a structure inside the electronic device. This means that regardless of a viewing angle from the outside to the inside, none of the internal structure of the electronic device is visible, thereby further improving aesthetic appeal of the electronic device.

In some possible implementations of the first aspect, a first notch is provided on a surface that is of the second side plate and that is opposite to the first side plate, and the first notch is aligned with the second sound output subchannel in the first direction.

In the foregoing electronic device, the first notch is provided on the second side plate, so that a size of the second sound output subchannel is increased while processing difficulty and assembly difficulty are increased to a relatively small extent, thereby facilitating optimization of a sound effect of the electronic device.

In some possible implementations of the first aspect, the sound output channel further includes a third sound output subchannel, a gap is formed between the first portion and the second side plate, and the gap forms the third sound output subchannel. The first portion blocks the sound outlet of the second sound output subchannel in a second direction, and the second direction is perpendicular to the first projection surface.

In the electronic device, the third sound output subchannel communicating with the second sound output subchannel is the gap between the first portion and the second side plate in the main body. A processing process of the third sound output subchannel is simple, and production costs are reduced. In addition, the first portion blocks the sound outlet of the second sound output subchannel, so that the first sound output subchannel and the second sound output subchannel are invisible from the outside, thereby further beautifying an appearance of the electronic device.

In some possible implementations of the first aspect, a second notch is provided on a surface that is of the first portion and that is opposite to the second side plate, and the second notch is aligned with the second sound output subchannel in the second direction.

In the foregoing electronic device, the second notch is provided on the first portion, so that a size of the third sound output subchannel is expanded, and a communication path between the sound cavity and the outside of the electronic device is expanded, thereby facilitating optimization of a sound effect of the electronic device.

In some possible implementations of the first aspect, the second portion further includes a reinforcing part. The reinforcing part is distributed in the first sound output subchannel, and is connected to opposite surfaces of the first sound output subchannel.

In the foregoing electronic device, the reinforcing part is added to the first sound output subchannel, so that a region with weak mechanical performance in the cover can be improved, and overall mechanical performance of the cover can be improved.

In some possible implementations of this application, a provision region of the sound output channel in the cover is the same as a region that is in the cover and that is connected to the main body.

In some possible implementations of the first aspect, the sound outlet of the sound output channel is provided on the cover. In the foregoing electronic device, the sound outlet of the sound output channel is provided on the cover, and no notch or hole needs to be added on the main body, thereby ensuring mechanical performance of the main body and improving overall strength of the electronic device.

In some possible implementations of the first aspect, a second through hole is provided on the first portion, and an opening of the second through hole forms the sound outlet of the sound output channel.

In some possible implementations of the first aspect, the electronic device is a foldable electronic device. The electronic device may be in a flattened state, a folded state, or an intermediate state. The intermediate state may also be referred to as a hovering state (or a rotation-stop state), and may be any state between the flattened state and the folded state. It may be understood that the foldable electronic device in this application may be an inward foldable device, that is, the display component of the mobile phone in the folded state is located on an inner side of the main body. The foldable electronic device in this application may alternatively be an outward foldable device, that is, the display component of the mobile phone in the folded state is located on an outer side of the main body. This is not specifically limited in this application.

In some possible implementations of the first aspect, when the electronic device is in the flattened state and the intermediate state, the sound inlet of the sound output channel communicates with the sound cavity.

That is, in this application, when the electronic device is switched from the folded state to the flattened state, or when the electronic device is switched from the flattened state to the folded state, in the first direction, an edge that is of the display component and that is parallel to a hinge mechanism slides relative to the corresponding cover. When the electronic device is switched between the folded state and the flattened state, a distance of the display component relative to the second portion changes. Compared with the flattened state, in the intermediate state and the folded state, the edge that is of the display component and that is parallel to the hinge mechanism slides toward the corresponding cover. To ensure normal use of the sound output channel in the intermediate state and the flattened state, it needs to be ensured that the sound inlet of the sound output channel communicates with the sound cavity in the two states.

In the foregoing electronic device, a position of the sound inlet on the sound output channel is properly set, so that the sound inlet of the sound output channel can communicate with the sound cavity in the flattened state and the intermediate state.

In some possible implementations of the first aspect, the sound inlet of the sound output channel is provided on a surface that is of the second portion and that faces the display component.

In the foregoing electronic device, a position of the sound inlet on the sound output channel is properly set, so that the sound inlet of the sound output channel can communicate with the sound cavity in the flattened state and the intermediate state. That is, a speaker module in the electronic device in the flattened state and the intermediate state can work normally.

In some possible implementations of the first aspect, an orthographic projection of the sound inlet of the sound output channel on the second projection surface at least partially does not overlap an orthographic projection of the display component on the second projection surface.

A second aspect of this application provides a cover. The cover includes a first portion and a second portion. The first portion is configured to cover at least a part of an edge of a display component, and a plane on which the display component is located is a first projection surface. The second portion is located on a side that is of the first portion and that faces the first portion, and is connected to the first portion. The second portion is connected to the main body, and the main body internally includes a sound cavity. At least a part of a sound output channel is provided on the cover, the sound output channel is used to connect the sound cavity and the outside of an electronic device, an orthographic projection of the sound output channel on a second projection surface is greater than 0, and the second projection surface is perpendicular to the first projection surface and parallel to an edge that is of the display component and that corresponds to the sound output channel.

### BRIEF DESCRIPTION OF DRAWINGS

FIG. 1 is an exploded view of a mobile phone 1 according to some embodiments of this application;
FIG. 2(a) is a top view of a mobile phone 1 according to some embodiments of this application;
FIG. 2(b) is a partial enlarged view of a mobile phone 1 in the region S₁ in FIG. 2(a) according to some embodiments of this application, where a cover is not shown in the figure;
FIG. 2(c) is a partial enlarged view of a mobile phone 1 in the region S₁ in FIG. 2(a) according to some embodiments of this application;
FIG. 3 is a sectional view of a mobile phone 1 along the M-M section in FIG. 2(a) according to some embodiments of this application;
FIG. 4 is a partial enlarged view of a mobile phone 1a in the region S₂ in FIG. 3 according to some embodiments of this application;
FIG. 5 is a partial enlarged view of a mobile phone 1a in the region S₁ in FIG. 2(a) according to some embodiments of this application;
FIG. 6 is a partial enlarged view of a mobile phone 1a in the region S₁ in FIG. 2(a) according to some other embodiments of this application;
FIG. 7 is a partial enlarged view of a mobile phone 1b in the region S₂ in FIG. 3 according to some other embodiments of this application;
FIG. 8 is a partial enlarged view of a mobile phone 1b in the region S₁ in FIG. 2(a) according to some embodiments of this application;
FIG. 9(a) is a partial enlarged view of a mobile phone 1b in the region S₃ in FIG. 7 according to some embodiments of this application;
FIG. 9(b) is a partial enlarged view of a mobile phone 1b in the region S₃ in FIG. 7 according to some other embodiments of this application;
FIG. 9(c) is a partial enlarged view of a mobile phone 1b in the region S₃ in FIG. 7 according to some other embodiments of this application;
FIG. 9(d) is a partial enlarged view of a mobile phone 1b in the region S₃ in FIG. 7 according to some other embodiments of this application;
FIG. 10(a) is a side view of a mobile phone 1b according to some embodiments of this application;
FIG. 10(b) is a partial enlarged view of a mobile phone 1b in the region S₄ in FIG. 10(a) according to some embodiments of this application;
FIG. 10(c) is a partial enlarged view of a mobile phone 1b in the region S₄ in FIG. 10(a) according to some other embodiments of this application;
FIG. 10(d) is a partial enlarged view of a mobile phone 1b in the region S₄ in FIG. 10(a) according to some other embodiments of this application;
FIG. 11 is an exploded view of a mobile phone 1 according to some embodiments of this application, where the mobile phone 1 is a foldable electronic device;
FIG. 12 is a top view of a mobile phone 1 according to some embodiments of this application;
FIG. 13 is a sectional view of a mobile phone 1 along the N-N section in FIG. 12 according to some embodiments of this application, where the N-N section passes through a sound output channel 500 in the mobile phone 1;
FIG. 14 is a partial enlarged view of the region S₆ in FIG. 11 according to some embodiments of this application;
FIG. 15 is a partial enlarged view of the region S₇ in FIG. 14 according to some embodiments of this application;
FIG. 16(a) is a partial enlarged view of the cover 100 in the region S₇ in FIG. 14 according to some embodiments of this application;
FIG. 16(b) is a partial enlarged view of the cover 100 in the region S₇ in FIG. 14 from another perspective according to some embodiments of this application;
FIG. 17 is a partial enlarged view of the region S₇ in FIG. 14 according to some embodiments of this application, where a first sound output subchannel 510 is further shown;
FIG. 18 is a partial enlarged view of the main body 300 in the region S₇ in FIG. 14 according to some embodiments of this application;
FIG. 19 is a partial enlarged view of the region S₇ in FIG. 14 according to some embodiments of this application, where a second sound output subchannel 520 is further shown;
FIG. 20 is a partial enlarged view of the region S₇ in FIG. 14 according to some embodiments of this application, where a third sound output subchannel 530 is further shown; and
FIG. 21 is an exploded view of a mobile phone 1 according to some embodiments of this application.

### DESCRIPTION OF EMBODIMENTS

To make the objectives, technical solutions, and advantages of this application clearer, the following further describes implementations of this application in detail with reference to the accompanying drawings.

This application provides an electronic device. The electronic device includes but is not limited to any one of electronic products such as a mobile phone, a tablet computer, a notebook computer, an in-vehicle computer, an e-reader, and a wearable electronic device. For ease of description, the following uses an example in which the electronic device is a mobile phone for description.

The following describes a specific structure of the mobile phone in detail with reference to the accompanying drawings.

Before the specific structure of the mobile phone is described, for ease of description, an x-axis, a y-axis, and a z-axis in the mobile phone are first defined. The x-axis and the y-axis are parallel to a display component of the mobile phone. The x-axis may point from the bottom of the mobile phone (for example, an end at which a charging port is disposed on the mobile phone) to the top of the mobile phone (for example, an end at which a camera is disposed on the mobile phone). The y-axis intersects the x-axis, and a direction of the z-axis is a thickness direction of the mobile phone. In addition, a plane on which the display component is located is defined as a first projection surface, and a surface that is perpendicular to the first projection surface and parallel to an edge that is of the display component and that corresponds to a sound output channel is defined as a second projection surface. It is not difficult to find that the first projection surface may be a plane, and the second projection surface may be a plane, a curved surface, a folded surface, or the like. This is not specifically limited in this application.

It may be understood that being parallel to each other in this application is not being absolutely parallel, and being approximately parallel due to factors such as a processing error and an assembly error (for example, an included angle between two structure features is 181°, 179.8°, 179°, or 178°) also falls within a range of being parallel to each other in this application. Limitations on being parallel to each other are not repeatedly described in the following. Being perpendicular to each other in this application is not being absolutely perpendicular, and being approximately perpendicular due to factors such as a processing error and an assembly error (for example, an included angle between two structure features is 92°, 89.9°, 89°, or 88°) also falls within a range of being perpendicular to each other in this application. Limitations on being perpendicular to each other are not repeatedly described in the following.

In some embodiments of this application, the x-axis direction, the y-axis direction, and the z-axis direction intersect each other. In some implementations, the x-axis direction, the y-axis direction, and the z-axis direction are perpendicular to each other.

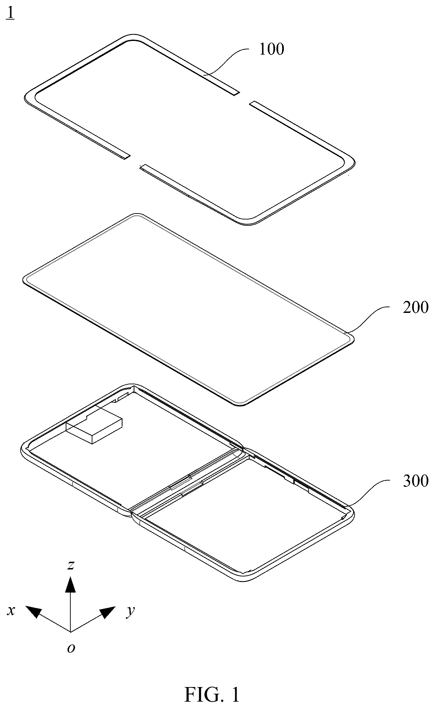

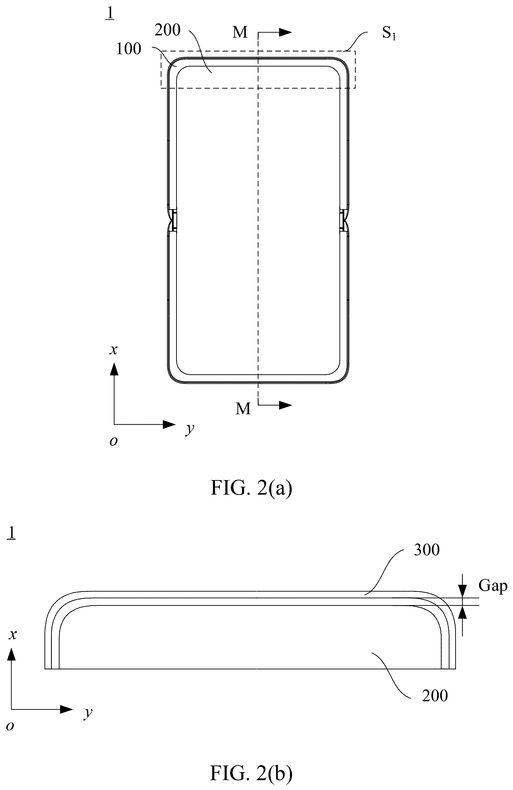

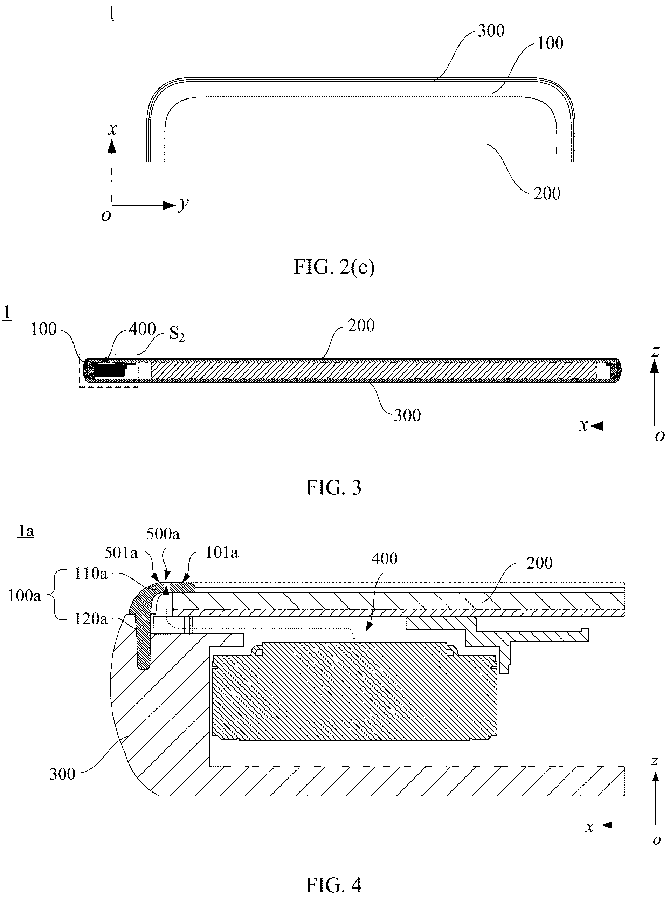

FIG. 1 is an exploded view of a mobile phone 1 according to some embodiments of this application. FIG. 2(a) is a top view of a mobile phone 1 according to some embodiments of this application. FIG. 2(b) is a partial enlarged view of a mobile phone 1 in the region S₁ in FIG. 2(a) according to some embodiments of this application, where a cover is not shown in the figure. FIG. 2(c) is a partial enlarged view of a mobile phone 1 in the region S₁ in FIG. 2(a) according to some embodiments of this application. FIG. 3 is a sectional view of a mobile phone 1 along the M-M section in FIG. 2(a) according to some embodiments of this application. With reference to FIG. 1 to FIG. 3, it can be learned that the mobile phone 1 in this application includes a cover 100, a display component 200, and a main body 300.

In some embodiments of this application, a gap is formed between the display component 200 and the main body 300.

In this application, the gap formed between the display component 200 and the main body 300 is a gap between the display component 200 and the main body 300 that is observed by a user when the user looks at the mobile phone 1 from a side on which the display component 200 is located. For example, as shown in FIG. 2(b), when the user looks at the mobile phone 1 from the side on which the display component 200 is located, a seen gap between the display component 200 and the main body 300 may be the gap (Gap). It may be understood that the gap formed between the display component 200 and the main body 300 is not repeatedly limited below. With reference to FIG. 2(b) and FIG. 2(c), it can be learned that the cover 100 covers at least a part of the display component 200 and the main body 300, and covers the gap (Gap) between the display component 200 and the main body 300, so that an appearance of the mobile phone 1 is more aesthetic.

To resolve the foregoing technical problem of how to set a sound output channel, this application provides a mobile phone 1a. A sound output channel 500a is provided on a cover 100a of the mobile phone 1a. The following provides detailed descriptions with reference to FIG. 4.

FIG. 4 is a partial enlarged view of a mobile phone 1a in the region S₂ in FIG. 3 according to some embodiments of this application.

As shown in FIG. 4, in some embodiments of this application, the mobile phone 1a includes a cover 100a, a display component 200, and a main body 300. The cover 100a includes a first portion 110a and a second portion 120a that are connected. The display component 200 is supported on the main body 300, and a gap (not marked) is formed between the display component 200 and the main body 300. The first portion 110a in the cover 100a covers at least a part of an edge of the display component 200, and an orthographic projection of the first portion 110a on a first projection surface at least partially overlaps an orthographic projection of the edge of the display component 200 on the first projection surface. The second portion 120a in the cover 100a extends from the first portion 110a toward the main body 300 and is mounted on the main body 300 through the gap. The main body 300 internally includes a sound cavity 400, and a sound output channel 500a is provided on the cover 100a. The sound output channel 500a connects the sound cavity 400 and the outside of the mobile phone 1a. An area of an orthographic projection of a sound outlet 501a of the sound output channel 500a on a second projection surface is 0. Refer to FIG. 4. It can be learned that the sound outlet 501a of the sound output channel 500a is provided on a first cover surface 101a of the cover 100a. The first cover surface 101a is a surface that is on the first portion 110a, that is away from the display component 200, and that is parallel to the first projection surface. Details are not described below. In other words, the first cover surface 101a is a surface of the first portion 110a that can be visually observed when the mobile phone 1a is observed from a side on which the display component 200 is located.

It may be understood that, in this application, the sound outlet is a port on a side that is of the sound output channel and that is away from the sound cavity 400, and the sound inlet that appears below is a port on a side that is of the sound output channel and that is close to the sound cavity 400. For example, a sound output channel includes a first port and a second port. The first port is connected to the outside, and the second port is connected to the sound cavity. In this case, the first port is a sound outlet, and the second port is a sound inlet. The concepts of the sound outlet and the sound inlet are not repeatedly limited below.

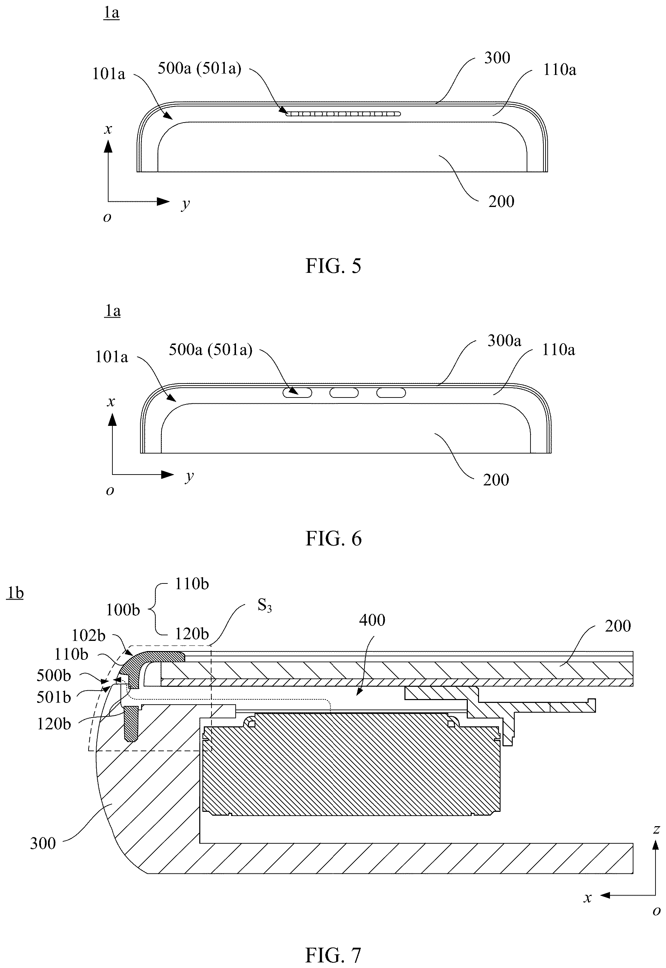

FIG. 5 is a partial enlarged view of a mobile phone 1a in the region S₁ in FIG. 2(a) according to some embodiments of this application. FIG. 6 is a partial enlarged view of a mobile phone 1a in the region S₁ in FIG. 2(a) according to some other embodiments of this application.

According to FIG. 4, FIG. 5, and FIG. 6, it is not difficult to find that, because the sound output channel 500a is provided on the first portion 110a of the cover 100a, and the sound outlet 501a of the sound output channel 500a is provided on the first cover surface 101a on the first portion 110a, when the user looks at the mobile phone 1a from the side on which the display component 200 is located, the sound outlet 501a of the sound output channel 500a is visible. In some application scenarios, another component inside the mobile phone 1a is even visible through the sound outlet 501a.

For the mobile phone 1a, when the sound output channel 500a is provided on the first portion 110a of the cover 100a, and the sound outlet 501a of the sound output channel 500a is provided on the first cover surface 101a on the first portion 110a, if the user looks at the mobile phone 1a from the side on which the display component 200 is located, the sound outlet 501a of the sound output channel 500a is visible, and another component inside the mobile phone 1a is visible through the sound outlet 501a, resulting in poor aesthetic appeal of the mobile phone 1a. In addition, a size of the first portion 110a needs to be increased to ensure that the cover 100a has sufficient mechanical strength. However, this reduces dimensional space of the display component 200 in the mobile phone 1a, and finally causes low space utilization of the mobile phone 1a.

To resolve the technical problem that the mobile phone 1a has poor aesthetic appeal and space utilization is low in the foregoing technical solutions, this application further provides a mobile phone 1b. The mobile phone 1b includes a cover 100b, a display component 200, and a main body 300. The cover 100b includes a first portion 110b and a second portion 120b that are connected. The display component 200 is supported on the main body 300, and a gap is formed. The cover 100b is configured to block the gap. The first portion 110 covers at least a part of an edge of the display component 200. The second portion 120b is formed by extending toward the main body 300 and is mounted on the main body 300. The main body 300 internally includes a sound cavity 400, and a sound output channel 500b that connects the sound cavity 400 and the outside of the mobile phone 1b is provided on the cover 100b and/or the main body 300. An area of an orthographic projection of a sound outlet 501b of the sound output channel 500b on a side projection surface is greater than 0. The side projection surface is perpendicular to a plane on which the display component is located, and is parallel to an edge that is of the display component 200 and that corresponds to the sound output channel 500b. The following provides detailed descriptions with reference to FIG. 7.

FIG. 7 is a partial enlarged view of a mobile phone 1b in the region S₂ in FIG. 3 according to some other embodiments of this application.

As shown in FIG. 7, in some embodiments of this application, the mobile phone 1b includes a cover 100b, a display component 200, and a main body 300. The cover 100b includes a first portion 110b and a second portion 120b that are connected. The display component 200 is supported on the main body 300, and a gap (not marked) is formed between the display component 200 and the main body 300. The first portion 110b in the cover 100b covers at least a part of an edge of the display component 200, and an orthographic projection of the first portion 110b on a first projection surface at least partially overlaps an orthographic projection of the edge of the display component 200 on the first projection surface. The second portion 120b in the cover 100b extends from the first portion 110b toward the main body 300 and is mounted on the main body 300 through the gap. The main body 300 internally includes a sound cavity 400, and a sound output channel 500b is provided on the cover 100b and/or the main body 300. The sound output channel 500b connects the sound cavity 400 and the outside of the mobile phone 1b. An area of an orthographic projection of a sound outlet 501b of the sound output channel 500b on a second projection surface is greater than 0. Refer to FIG. 7. It can be learned that the sound outlet 501b of the sound output channel 500b is at least partially provided on a second cover surface 102b of the cover 100b, and the cover 100b at least partially forms the sound outlet 501b of the sound output channel 500b. The second cover surface 102b is a surface that is on the first portion 110b, that is away from the display component 200, and that is not parallel to the first projection surface. Details are not described below.

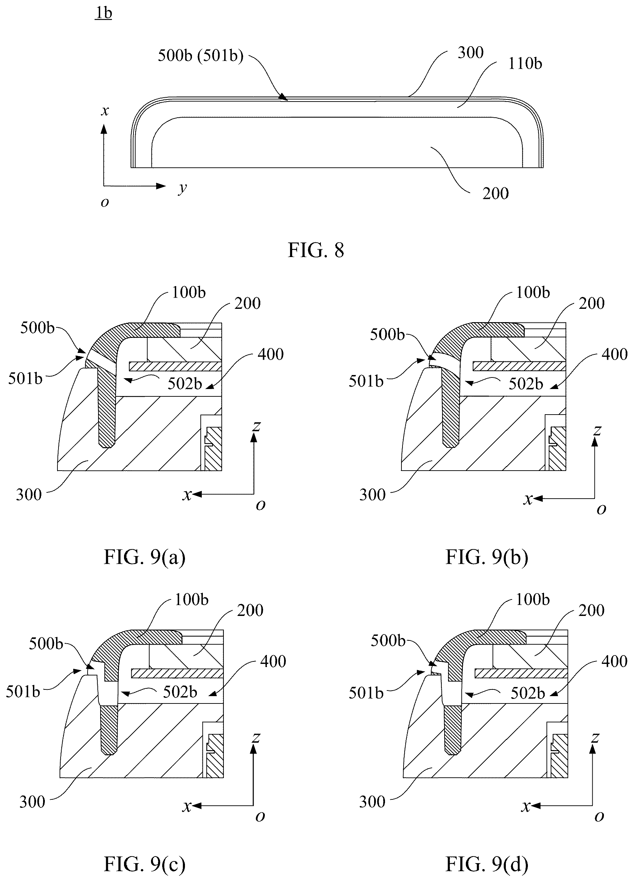

FIG. 8 is a partial enlarged view of a mobile phone 1b in the region S₁ in FIG. 2(a) according to some embodiments of this application.

With reference to FIG. 7 and FIG. 8, it can be learned that, because the sound output channel 500b is provided on the cover 100b and/or the main body 300, and the sound outlet 501b of the sound output channel 500b is provided on the second cover surface 102b of the cover 100b, when looking at the mobile phone 1b from the side on which the display component 200 is located, the user cannot directly see the sound outlet 501b of the sound output channel 500b, nor can the user see another component inside the mobile phone 1 through the sound outlet 501b of the sound output channel 500b. A concept of the sound outlet 501b has been described above, and details are not described herein again.

For the mobile phone 1b, when the sound output channel 500b is provided on the cover 100b, and an area of an orthographic projection of the sound output channel 500b on the second projection surface is greater than 0, if the user looks at the mobile phone 1b from the side on which the display component 200 is located, the sound output channel 500b and another internal component are invisible, thereby improving aesthetic appeal of the mobile phone 1b. In addition, mechanical performance of the cover 100b does not need to be ensured by increasing a size of the first portion 110b. Therefore, in the mobile phone 1b, dimensional space of the display component 200 can be increased, thereby enhancing efficient space utilization of the mobile phone 1b.

For ease of understanding, the area of the orthographic projection of the sound outlet 501b of the sound output channel 500b on the first projection surface is defined as A₁, and the area of the orthographic projection of the sound outlet 501b of the sound output channel 500b on the second projection surface is defined as A₂. A ratio of A₁ to A₂ is defined as a front-lateral proportion parameter. It may be understood that, a smaller front-lateral proportion parameter indicates that the orthographic projection of the sound outlet 501b of the sound output channel 500b on the second projection surface is farther larger than the orthographic projection of the sound outlet 501b of the sound output channel 500b on the first projection surface. On the contrary, a larger front-lateral proportion parameter indicates that the orthographic projection of the sound outlet 501b of the sound output channel 500b on the second projection surface is farther smaller than the orthographic projection of the sound outlet 501b of the sound output channel 500b on the first projection surface. A value of the front-lateral proportion parameter is not specifically limited in this application.

In some embodiments of this application, the front-lateral proportion parameter may be less than or equal to 1. For example, the front-lateral proportion parameter may be at least one of 0, 0.05, 0.1, 0.15, 0.2, 0.25, 0.3, 0.35, 0.4, 0.45, 0.5, 0.55, 0.6, 0.65, 0.7, 0.75, 0.8, 0.85, 0.9, 0.95, and 1.0.

It should be noted that a form of the sound output channel 500b is not specifically limited in this application. Any sound output channel 500b that can meet the foregoing condition falls within the protection scope of this application.

It may be understood that the sound output channel 500b in this application may be extended in a plurality of manners. An extension direction of the sound output channel 500b may be a direction pointing from the sound inlet 502b of the sound output channel 500b to the sound outlet 501b. FIG. 9(a) to FIG. 9(d) respectively show partial enlarged views of the region S₃ in FIG. 7 in some embodiments. In some implementations, as shown in FIG. 9(a), the sound output channel 500b may be a straight-line channel extending along a straight line. In some other alternative implementations, as shown in FIG. 9(b), the sound output channel 500b may be a curved channel extending along a curve. In some other alternative implementations, as shown in FIG. 9(c) and FIG. 9(d), the sound output channel 500b may be a folded channel extending along a folded line. This is not specifically limited in this application. It may be understood that FIG. 9(a) to FIG. 9(d) show only some extension solutions of the sound output channel 500b, and do not constitute a specific limitation on implementations of this application.

It may be understood that a composition manner of a channel wall surface of the sound output channel 500b is not specifically limited in this application. In some implementations, as shown in FIG. 9(a) and FIG. 9(b), the channel wall surface of the sound output channel 500b is the surface of the cover 100b. In some other alternative implementations, as shown in FIG. 9(c), a channel wall surface of a first channel that is of the sound output channel 500b and that is close to the sound inlet 502b is the surface of the cover 100b, and a channel wall surface of a second channel that is of the sound output channel 500b and that is close to the sound outlet 501b is a combination of the surface of the cover 100b and the surface of the main body 300. In some other alternative implementations, as shown in FIG. 9(d), a channel wall surface of a first channel that is of the sound output channel 500b and that is close to the sound inlet 502b is the surface of the cover 100b, a channel wall surface of a second channel that is of the sound output channel 500b and that is close to the sound outlet 501b is the surface of the cover 100b, a third channel is provided between the first channel and the second channel, and a channel wall surface of the third channel is a combination of the surface of the cover 100b and the surface of the main body 300. It may be understood that FIG. 9(a) to FIG. 9(d) show only some composition solutions of the channel wall surface of the sound output channel 500b, and do not constitute a specific limitation on implementations of this application.

It may be understood that the sound output channel 500b in this application is distributed on the cover 100b and the main body 300 in various manners.

In some embodiments of this application, the sound outlet 501b of the sound output channel 500b is provided on the cover 100b and the main body 300. That is, the sound outlet 501b of the sound output channel 500b is jointly enclosed by the cover 100b and the main body 300. Detailed descriptions are provided below with reference to accompanying drawings.

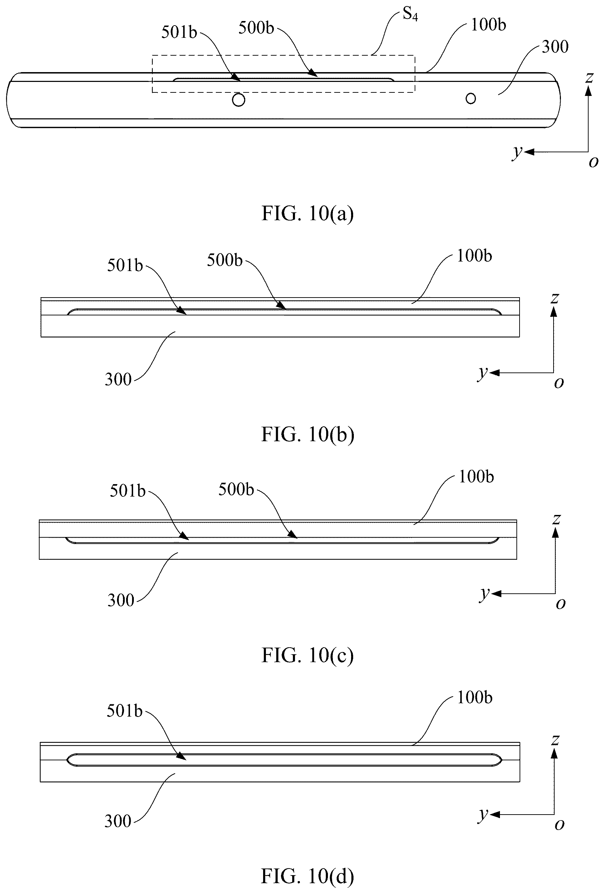

FIG. 10(a) is a side view of a mobile phone 1b according to some embodiments of this application. FIG. 10(b) to FIG. 10(d) are respectively partial enlarged views of the region S₄ in FIG. 10(a) in some embodiments. In some implementations, as shown in FIG. 10(b), a first sound output notch is provided on the cover 100b, and the first sound output notch and the surface of the main body 300 jointly form the sound outlet 501b of the sound output channel 500b. In some other alternative implementations, as shown in FIG. 10(c), a second sound output notch is provided on the main body 300, and the second sound output notch and the surface of the cover 100b jointly form the sound outlet 501b of the sound output channel 500b. In some other alternative implementations, as shown in FIG. 10(d), a first sound output notch is provided on the cover 100b, a second sound output notch is provided on the main body 300, and the first sound output notch and the second sound output notch jointly form the sound outlet 501b of the sound output channel 500b. It may be understood that FIG. 10(a) to FIG. 10(d) show only some distribution solutions of the sound output channel 500b on the cover 100b and the main body 300, and do not constitute a specific limitation on implementations of this application.

For the mobile phone 1b, the sound outlet 501b of the sound output channel 500b can be formed only by providing a notch on the cover 100b and/or the main body 300. Therefore, overall processing difficulty is low, a small-sized structure is avoided between the cover 100b and the main body 300, and structural strength of the cover 100b and the main body 300 is improved.

In some other embodiments of this application, the sound outlet 501b of the sound output channel 500b is provided on the cover 100b. That is, the sound outlet 501b of the sound output channel 500b is enclosed by the cover 100b. In some implementations, the sound outlet 501b of the sound output channel 500b is provided only on the second cover surface 102b. In some other alternative implementations, a part of the sound outlet 501b of the sound output channel 500b is provided on the first cover surface 101b, and the other part is provided on the second cover surface 102b. This is not specifically limited in this application.

In some other embodiments of this application, the sound outlet 501b of the sound output channel 500b is provided on the main body 300. That is, the sound outlet 501b of the sound output channel 500b is enclosed by the main body 300.

In addition, in some implementations, cross-sectional shapes at different positions in the sound output channel 500b may be the same. In some other alternative implementations, cross-sectional shapes at different positions in the sound output channel 500b may be different. This is not specifically limited in this application. It may be understood that, in this application, a cross section is a plane perpendicular to an extension direction of a sound output channel, and a cross-sectional shape is a shape obtained after a component is cut along the cross section.

In some implementations, a cross-sectional shape of the sound output channel 500b may be at least one of regular shapes such as a rectangle, a circle, a triangle, and a pentagon. In some other alternative implementations, the cross-sectional shape of the sound output channel 500b may alternatively be an irregular shape. This is not specifically limited in this application.

The technical solutions in this application are described in detail below with reference to the accompanying drawings.

### Application scenario 1

In the application scenario 1, a mobile phone is a foldable electronic device, and can be switched between a flattened state and a folded state. When the mobile phone is in the flattened state, all components in the mobile phone may be in the flattened state. When the mobile phone is in the folded state, all components in the mobile phone may be in the folded state. In addition, the mobile phone may alternatively be in an intermediate state between the flattened state and the folded state. The intermediate state may also be referred to as a hovering state (or a rotation-stop state), and may be any state between the flattened state and the folded state. It may be understood that the foldable electronic device in this application may be an inward foldable device, that is, the display component of the mobile phone in the folded state is located on an inner side of the main body. The foldable electronic device in this application may alternatively be an outward foldable device, that is, the display component of the mobile phone in the folded state is located on an outer side of the main body. This is not specifically limited in this application. It should be noted that, for a foldable electronic device in this application, a direction determined based on a display component is a direction determined based on the display component of the foldable electronic device in the flattened state, or may be a direction determined based on the display component of the foldable electronic device in the intermediate state. Details are not described below. For example, refer to a first projection surface and a second projection surface of the foldable electronic device.

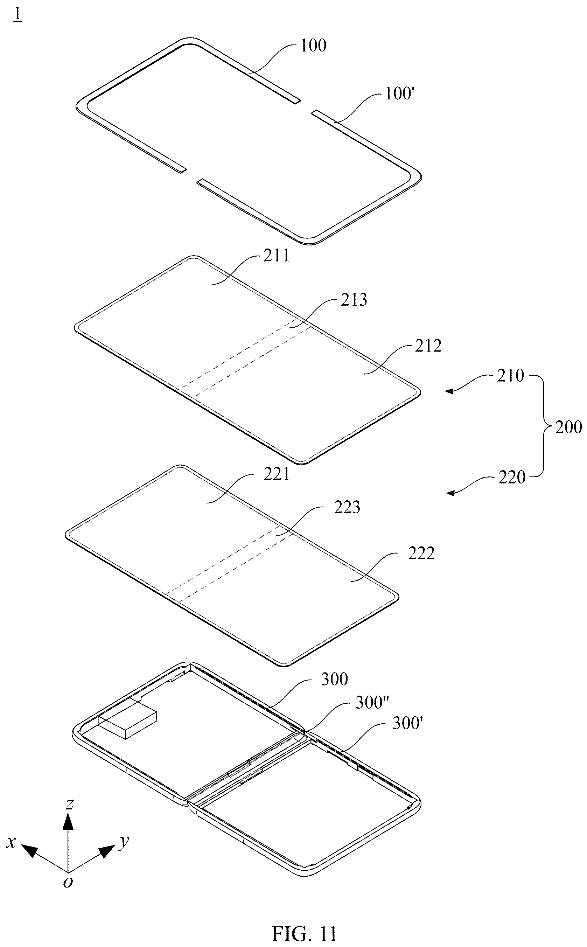

FIG. 11 is an exploded view of a mobile phone 1 according to some embodiments of this application, where the mobile phone 1 is a foldable electronic device, and the figure is in a first perspective. As shown in FIG. 11, in some embodiments of this application, the mobile phone 1 includes a cover 100, a cover 100', a display component 200, a main body 300, a main body 300', and a hinge mechanism 300". The hinge mechanism 300" is rotatably connected between the main body 300 and the main body 300'.

The display component 200 includes a flexible screen 210 and a screen holding plate 220. The flexible screen 210 may include a first partition 211, a second partition 212, and a third partition 213. The screen holding plate 220 may include a first holding part 221, a second holding part 222, and a third holding part 223. The first partition 211 and the first holding part 221 are disposed opposite to each other and are fastened to each other. The second partition 212 and the second holding part 222 are disposed opposite to each other and are fastened to each other. The third partition 213 and the third holding part 223 are disposed opposite to each other. The flexible screen 210 may be a flexible organic light-emitting diode (organic light-emitting diode, OLED). This is not specifically limited in this application.

In a flattened state, the first partition 211, the third partition 213, and the second partition 212 are sequentially disposed in an x-axis direction. The first holding part 221, the third holding part 223, and the second holding part 222 are sequentially disposed in the x-axis direction. The main body 300, the hinge mechanism 300", and the main body 300' are sequentially disposed in the x-axis direction. In a folded state, a support plate (also referred to as a door plate) in the hinge mechanism 300" is jointly provided in a specific shape (for example, a water drop shape), the third holding part 223 encloses space of a specific shape, the third partition 213 is bent into an adaptive characteristic shape (for example, a water drop shape) and is accommodated in the space of the specific shape, and the first partition 211 and the second partition 212 are disposed face to face. In the folded state, in a thickness direction of the mobile phone 1, the main body 300, the first screen holding part 221, and the first partition 211 are stacked, and the second partition 212, the second screen holding part 222, and the main body 300' are stacked.

A first gap (not shown in the figure) is formed between the first partition 211 and the main body 300. The cover 100 covers the first partition 211 and the main body 300 to block the first gap between the first partition 211 and the main body 300, and the cover 100 is connected to the main body 300. A second gap (not shown in the figure) is formed between the second partition 212 and the main body 300'. The cover 100' covers the second partition 212 and the main body 300' to block the second gap between the second partition 212 and the main body 300', and the cover 100' is connected to the main body 300'.

It may be understood that, when the mobile phone 1 is a foldable electronic device, the first gap may be a gap formed by sliding the first partition 211 (that is, the display component 200) and the main body 300 relative to each other when the mobile phone 1 is switched between the folded state and the flattened state. Alternatively, the first gap may be a gap formed between the first partition 211 (that is, the display component 200) and the main body 300 in the mobile phone 1 due to designing, molding, assembly, and the like. Similarly, the second gap may be a gap formed by sliding the second partition 212 (that is, the display component 200) and the main body 300' relative to each other when the mobile phone 1 is switched between the folded state and the flattened state. Alternatively, the second gap may be a gap formed between the second partition 212 (that is, the display component 200) and the main body 300' in the mobile phone 1 due to designing, molding, assembly, and the like.

It may be understood that the foregoing implementations show only some examples of the mobile phone 1, and the mobile phone 1 in another form also falls within the protection scope of this application. For example, the mobile phone 1 is a foldable electronic device, and the electronic device has two displays, respectively located on two opposite sides of the main body. One display covers two main bodies and the hinge mechanism, and the other display covers one main body and the hinge mechanism. In conclusion, any electronic device in which a cover is used to cover a gap between a main body and a display component may be used as the mobile phone 1 in this application. This is not specifically limited in this application.

In some embodiments of this application, a structure of the cover 100 is the same as or similar to the structure of the cover 100b in the foregoing embodiment. That is, the sound output channel in the mobile phone 1 may be provided on the cover 100. In some other embodiments of this application, a structure of the cover 100' is also the same as or similar to the structure of the cover 100b in the foregoing embodiment. That is, the sound output channel in the mobile phone 1 may be alternatively provided on the cover 100'. In some other embodiments of this application, structures of both the cover 100 and the cover 100' are the same as or similar to the structure of the cover 100b in the foregoing embodiment. That is, the sound output channel in the mobile phone 1 may be provided on the cover 100 and the cover 100'. For example, there may be a plurality of sound output channels 500, a sound outlet of at least one sound output channel 500 is provided on the cover 100, and a sound outlet of at least one sound output channel 500 is provided on the cover 100'. For another example, there is one sound output channel 500, a part of a sound outlet of the sound output channel 500 is provided on the cover 100, and the other part is provided on the cover 100'. This is not specifically limited in this application.

The following describes a specific structure in this application in detail by using an example in which the sound output channel is provided on the cover 100, that is, the sound outlet of the sound output channel is formed at least partially on the cover 100.

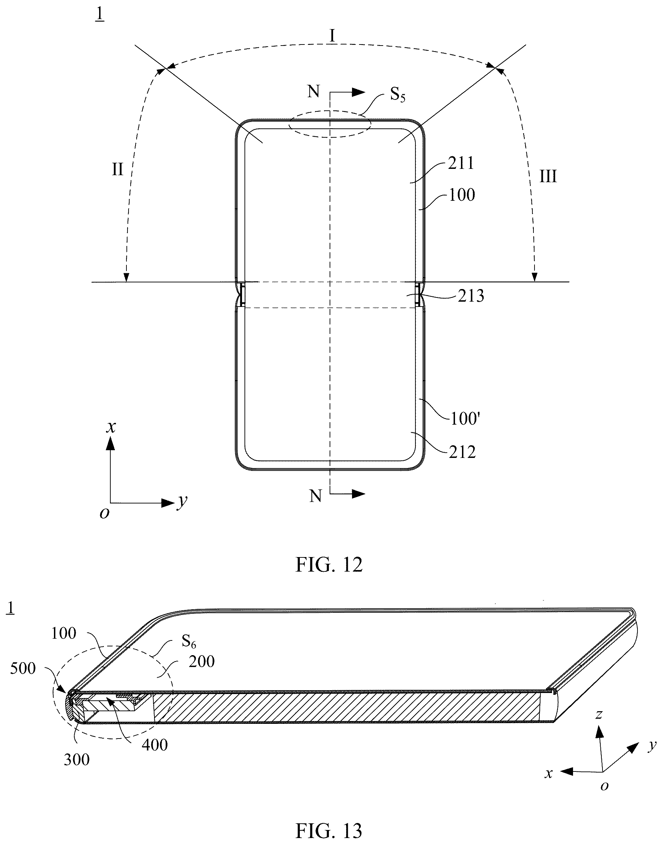

FIG. 12 is a top view of a mobile phone 1 according to some embodiments of this application. As shown in FIG. 12, in some embodiments of this application, the cover 100 may be divided into a first segment I, a second segment II, and a third segment III. The second segment II and the third segment III are parallel and disposed opposite to each other, and the second segment II and the third segment III are respectively connected to two ends of the first segment I. The sound output channel 500 may be provided at any one of the first segment I, the second segment II, and the third segment III.

Still refer to FIG. 12. In some implementations, the sound output channel 500 may be provided in a middle position of the first segment I of the cover 100. For example, the sound output channel 500 is provided on the cover 100 in a region S₅ in FIG. 12.

Still refer to FIG. 12. In some implementations, a region in which the sound output channel 500 is provided on the cover 100 may be different from a region that is in the cover 100 and that is connected to the main body 300. For example, the sound output channel 500 is provided on the first segment I in the cover 100, and the region that is in the cover 100 and that is connected to the main body 300 is located on the second segment II. In some other alternative implementations, a region in which the sound output channel 500 is provided on the cover 100 may be the same as a region that is in the cover 100 and that is connected to the main body 300. For example, the sound output channel 500 is provided on first segment I in the cover 100, the region that is in the cover 100 and that is connected to the main body 300 is located on the first segment I, and the region in which the sound output channel 500 is provided in the cover 100 is opposite to the region that is in the cover 100 and that is connected to the main body 300. It may be understood that, in this application, that two regions are different means that orthographic projections of the two regions on the first projection surface do not overlap. In this application, that two regions are the same means that orthographic projections of the two regions on the first projection surface basically overlap.

To balance a structure of the cover 100 to improve overall strength of the cover 100, in some embodiments of this application, the region in which the sound output channel 500 is provided in the cover 100 is the same as the region that is in the cover 100 and that is connected to the main body 300.

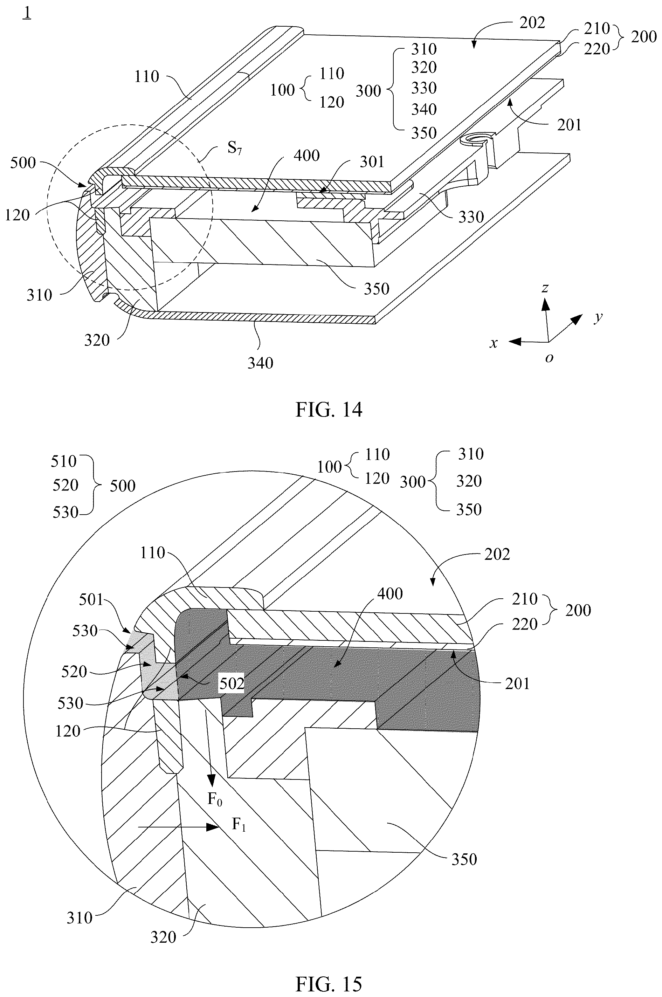

FIG. 13 is a sectional view of a mobile phone 1 along the N-N section in FIG. 12 according to some embodiments of this application, where the N-N section passes through a sound output channel 500 in the mobile phone 1. FIG. 14 is a partial enlarged view of the region S₆ in FIG. 13 according to some embodiments of this application. FIG. 15 is a partial enlarged view of the region S₇ in FIG. 14 according to some embodiments of this application.

For ease of description and understanding, the following describes the technical solutions in this application with reference to the cover 100, the display component 200, and the main body 300. With reference to FIG. 13 to FIG. 15, it can be learned that the main body 300 includes a support surface 301. The display component 200 is supported on the support surface 301, and a first gap (not marked) is formed between the display component 200 and the main body 300. The cover 100 covers the display component 200 and the main body 300, to block the first gap. The sound output channel 500 is provided on the cover 100 and/or the main body 300, the sound outlet 501 of the sound output channel 500 faces a periphery of the mobile phone 1, and the sound inlet 502 of the sound output channel 500 communicates with the sound cavity 400. The periphery of the mobile phone 1 means an upper side, a lower side, a left side, and a right side of the mobile phone 1 when the user looks at the mobile phone 1 from the side on which the display component 200 is located.

In some embodiments of this application, when the mobile phone 1 is in the flattened state and the intermediate state, the sound inlet 502 of the sound output channel 500 communicates with the sound cavity 400. It is not difficult to understand that when the mobile phone 1 is switched from the folded state to the flattened state, or when the mobile phone 1 is switched from the flattened state to the folded state, in a first direction F₁, an edge that is of the display component 200 and that is parallel to the hinge mechanism 300" slides relative to the corresponding cover 100. Compared with the flattened state, in the intermediate state and the folded state, the edge that is of the display component 200 and that is parallel to the hinge mechanism 302 slides toward the corresponding cover 100. To ensure normal use of the sound output channel 500 in the intermediate state and the flattened state, it needs to be ensured that the sound inlet 502 of the sound output channel 500 communicates with the sound cavity 400 in the two states.

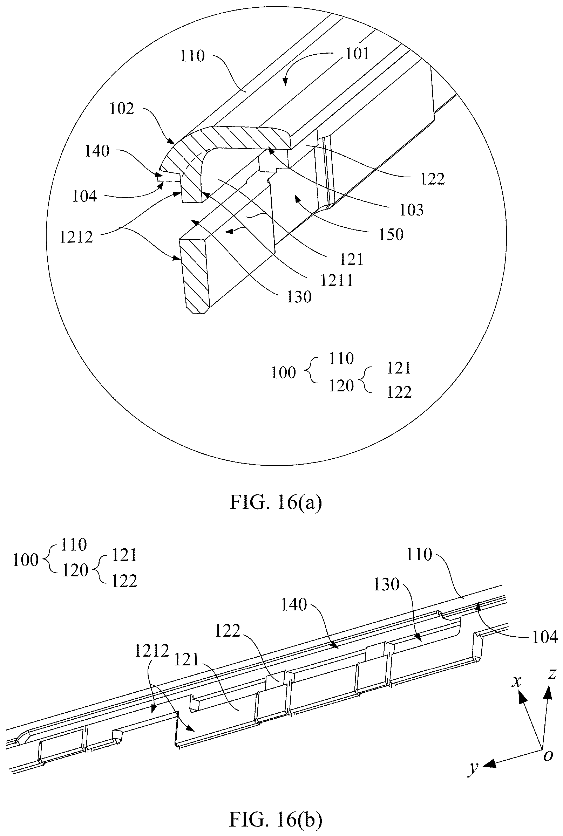

In some implementations, the sound inlet 502 of the sound output channel 500 is provided on a surface (for example, a first side plate surface 1211 in FIG. 16(a) below) that is on the second portion 120 and that faces the edge of the display component 200.

In some implementations, the sound inlet 502 of the sound output channel 500 is provided on a surface (for example, a first side plate surface 1211 in FIG. 16(a) below) that is on the second portion 120 and that faces the edge of the display component 200, and an orthographic projection of the sound inlet 502 on the second projection surface at least partially does not overlap an orthographic projection of the display component 200 on the second projection surface.

In the mobile phone 1, a position of the sound inlet 502 on the sound output channel 500 is properly set, so that the sound inlet 502 of the sound output channel 500 can communicate with the sound cavity 400 in the flattened state and the intermediate state. That is, a speaker module 350 in the mobile phone 1 can work normally.

Still refer to FIG. 14 and FIG. 15. In some embodiments of this application, the cover 100 includes a first portion 110 and a second portion 120. The first portion 110 covers the display component 200 and the main body 300, to block the first gap between the display component 200 and the main body 300. The second portion 120 is formed by extending from the first portion 110 in a direction pointing to the main body 300 (for example, an F₀ direction in FIG. 15), one side of the second portion 120 is connected to the first portion 110, and another side is mounted on the main body 300 through the first gap between the display component 200 and the main body 300.

Still refer to FIG. 14 and FIG. 15. In some embodiments of this application, the main body 300 includes a middle frame 310 and a fastening block 320. The first gap between the display component 200 and the main body 300 may be a gap between the display component 200 and the middle frame 310. In the first direction, the display component 200 and the middle frame 310 are respectively disposed on two opposite sides of the second portion 120. The first direction is a direction pointing from the middle frame 310 to the fastening block 320 (for example, an F₁ direction in FIG. 15). For example, the first direction is parallel to the x-axis. The second portion 120 is mounted on the middle frame 310 and/or the fastening block 320. It may be understood that, when a position for providing the sound output channel 500 on the cover 100 changes, the first direction may be adaptively adjusted based on a relative position of the sound output channel 500 relative to the cover 100. For example, when the sound output channel 500 is provided on the second segment II or the third segment III of the cover 100, the first direction is parallel to the y-axis. This is not specifically limited in this application.

Still refer to FIG. 14 and FIG. 15. In some embodiments of this application, the display component 200 has a first surface 201 and a second surface 202 that are disposed opposite to each other. The main body 300 has a support surface 301. The support surface 301 may be a plane in the main body 300, or the support surface 301 may be a plane including a plurality of structures in the main body 300. This is not specifically limited in this application. The first surface 201 of the display component 200 is attached to the support surface 301 of the main body 300, so that the display component 200 is supported on the main body 300.

In some implementations, the first surface 201 is a backlight surface of the display component 200, and the second surface 202 is a light-emitting surface of the display component 200. In some other alternative implementations, the first surface 201 is a light-emitting surface of the display component 200, and the second surface 202 is a backlight surface of the display component 200.

As shown in FIG. 14, in some embodiments of this application, the main body 300 further includes a support component 330. The support component 330 is connected to the middle frame 310 and the fastening block 320. In addition, a support surface is formed on the support component 330, and the support surface of the support component 330 is the support surface 301 of the main body 300. The first surface 201 of the display component 200 is attached to the support surface of the support component 330.

As shown in FIG. 14, in some embodiments of this application, the main body 300 further includes a rear housing 340 and a speaker module 350. The middle frame 310, the fastening block 320, the support component 330, and the rear housing 340 are connected. In addition, the middle frame 310, the fastening block 320, the support component 330, and the rear housing 340 jointly form a mounting cavity (not shown in the figure), and the speaker module 350 is located in the mounting cavity.

In some embodiments of this application, a sound production cavity is formed inside the speaker module 350. The sound production cavity communicates with the mounting cavity, to expand the sound production cavity. The sound production cavity and the mounting cavity outside the speaker module 350 may be used as the sound cavity 400 in this application. The speaker module 350 is an acoustic-electric conversion device. A working state of the speaker module 350 may be a state corresponding to an application scenario such as playing music, playing a video, or making a call by the mobile phone. In some implementations, the speaker module 350 may be a receiver or a speaker. This is not specifically limited in this application.

As shown in FIG. 15, the cover 100, the display component 200, and the main body 300 jointly form the sound cavity 400 (for example, a dark gray region in FIG. 15), and the cover 100 and the main body 300 jointly form the sound output channel 500 (for example, a light gray region in FIG. 15). The sound output channel 500 includes a first sound output subchannel 510, a second sound output subchannel 520, and a third sound output subchannel 530. The first sound output subchannel 510 is separately connected to the sound cavity 400 and the second sound output subchannel 520, and the third sound output subchannel 530 is separately connected to the second sound output subchannel 520 and the outside of the mobile phone 1.

The following further describes the technical solutions in this application with reference to a specific structure of the cover 100.

FIG. 16(a) is a partial enlarged view of the cover 100 in the region S₇ in FIG. 14 according to some embodiments of this application, where the cover 100 is in a first perspective. FIG. 16(b) is a partial enlarged view of the cover 100 in the region S₇ in FIG. 14 according to some embodiments of this application, where the cover 100 is in a second perspective. With reference to FIG. 15, FIG. 16 (a), and FIG. 16 (b), it can be learned that, in some embodiments of this application, the cover 100 includes a first portion 110 and a second portion 120. The first portion 110 includes a first cover surface 101, a second cover surface 102, and a third cover surface 103. The first cover surface 101 and the second cover surface 102 of the first portion 110 face away from a second surface 202 of the display component 200, and the third cover surface 103 of the first portion 110 faces the second surface 202 of the display component 200. The first cover surface 101 is connected to the second cover surface 102, and the first cover surface 101 and the third cover surface 103 are disposed opposite to each other.

In some implementations, the third cover surface 103 is attached to the second surface 202. In some other alternative implementations, the third cover surface 103 and the second surface 202 are spaced from each other. It may be understood that when the third cover surface 103 and the second surface 202 are spaced from each other, the third cover surface 103 and the second surface 202 may be parallel or approximately parallel. This is not specifically limited in this application. That the third cover surface 103 and the second surface 202 are spaced from each other means that a gap is formed between the first portion 110 and the display component 200 in a thickness direction.

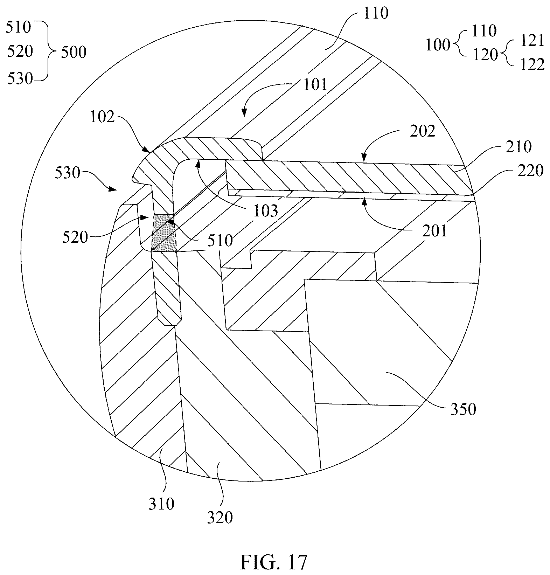

FIG. 17 is a partial enlarged view of the region S₇ in FIG. 14 according to some embodiments of this application, where a cross section of the first sound output subchannel 510 is marked. With reference to FIG. 16(a), FIG. 16(b), and FIG. 17, it can be learned that, in some embodiments of this application, the second portion 120 includes a first side plate 121, a through hole 130 is provided on the first side plate 121, and the through hole 130 forms the first sound output subchannel 510.

In the mobile phone 1, a sound inlet of the first sound output subchannel 510 communicates with the sound cavity, and the first sound output subchannel 510 is provided on the first side plate 121 in the second portion 120. In other words, the sound inlet of the first sound output subchannel 510 is provided on a surface of the first side plate 121, to ensure that the sound inlet of the first sound output subchannel 510 communicates with the sound cavity when the mobile phone 1 is switched between a folded state, a flattened state, and an intermediate state. Therefore, it is convenient to ensure that the speaker module 350 of the mobile phone 1 can work normally in each state.

In some implementations, the first side plate 121 includes a first side plate surface 1211 and a second side plate surface 1212 that are disposed opposite to each other. The first side plate surface 1211 faces the middle frame 310, the second side plate surface 1212 faces away from the middle frame 310 and faces the edge of the display component 200, and the through hole 130 connects the first side plate surface 1211 and the second side plate surface 1212.

In some other embodiments of this application, the second portion 120 includes a first side plate 121, a U-shaped through groove is provided at an end that is of the first side plate 121 and that is away from the first portion 110, and a groove wall of the U-shaped through groove and a surface of the main body 300 enclose the first sound output subchannel 510. In some implementations, the first side plate 121 includes a first side plate surface and a second side plate surface that are disposed opposite to each other. The first side plate surface faces the middle frame 310, the second side plate surface faces away from the middle frame 310 and faces the edge of the display component 200, and a U-shaped through groove connects the first side plate surface and the second side plate surface.

In some application scenarios, a cross section size of the first sound output subchannel 510 is relatively large. To maintain mechanical performance of the cover 100, in some embodiments of this application, a reinforcing part is disposed on the first sound output subchannel 510 to enhance the mechanical performance of the cover 100. Still refer to FIG. 16(a), FIG. 16(b), and FIG. 17. The second portion 120 in the cover 100 further includes a reinforcing part 122. The reinforcing part 122 is distributed in the first sound output subchannel 510 (that is, the through hole 130), and is connected to opposite surfaces of the first sound output subchannel 510.

For example, the first sound output subchannel 510 is a rectangular channel, and the reinforcing part 122 is a rectangular block. The rectangular channel includes a first channel surface and a second channel surface that are opposite to each other. The rectangular block includes a first rectangular surface and a second rectangular surface that are opposite to each other. The first channel surface is connected to the first rectangular surface, and the second channel surface is connected to the second rectangular surface.

It may be understood that the foregoing shows only one implementation of the first sound output subchannel 510 in this application, and another form of the first sound output subchannel 510 that can implement a sound output function also falls within the protection scope of this application. This is not specifically limited in this application. For example, a cross-sectional shape of the first sound output subchannel 510 may be a circle, an ellipse, a square, or the like. Similarly, the foregoing shows only one implementation of the reinforcing part 122 in this application, and another form of the reinforcing part 122 that can implement a reinforcing function also falls within the protection scope of this application. This is not specifically limited in this application. For example, a cross-sectional shape of the reinforcing part 122 may be a circle, an ellipse, a square, or the like.

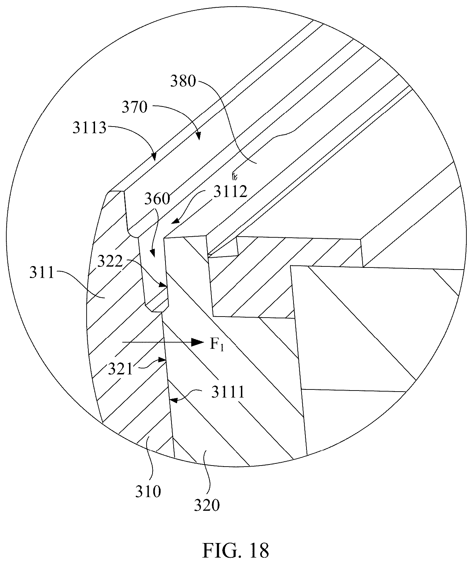

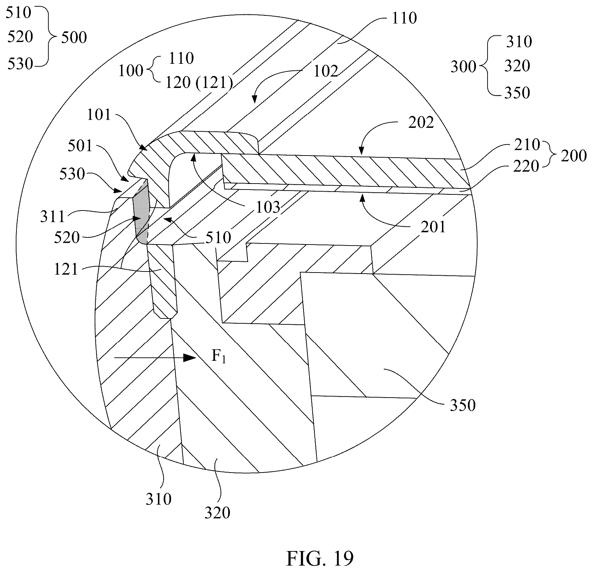

FIG. 18 is a partial enlarged view of the main body 300 in the region S₇ in FIG. 14 according to some embodiments of this application. FIG. 19 is a partial enlarged view of the region S₇ in FIG. 14 according to some embodiments of this application, where a cross section of the second sound output subchannel 520 is marked. With reference to FIG. 18 and FIG. 19, it can be learned that, in some embodiments of this application, in the mobile phone 1, a second sound output subchannel 520 is formed between the main body 300 and the second portion 120. In some implementations, the second sound output subchannel 520 is formed between the middle frame 310 in the main body 300 and the second portion 120.

In some embodiments of this application, the second sound output subchannel 520 is separately connected to the first sound output subchannel 510 and the third sound output subchannel 530, the first sound output subchannel 510 is connected to the sound cavity 400, and the third sound output subchannel 530 is connected to the outside of the mobile phone 1.

In some implementations, a sound inlet of the first sound output subchannel 510 communicates with the sound cavity 400, a sound outlet of the first sound output subchannel 510 communicates with a sound inlet of the second sound output subchannel 520, and a sound outlet of the second sound output subchannel 520 communicates with a sound inlet of the third sound output subchannel 530.

In some embodiments of this application, a projection of the sound outlet of the second sound output subchannel 520 toward the first sound output subchannel 510 is located on a channel surface of the first sound output subchannel 510 and/or a channel surface of the second sound output subchannel 520. In other words, any straight line outside the mobile phone 1 cannot pass through the second sound output subchannel 520 and the first sound output subchannel 510 to reach the sound cavity 400.

For the mobile phone 1, when looking inside the mobile phone 1 through the second sound output subchannel 520, the user can only see the channel surface of the first sound output subchannel 510 and/or the channel surface of the second sound output subchannel 520, but not a structure inside the mobile phone 1. This means that regardless of a viewing angle from the outside to the inside, none of the internal structure of the mobile phone 1 is visible, thereby further improving aesthetic appeal of the mobile phone 1.

With reference to FIG. 18 and FIG. 19, it can be learned that the main body 300 includes a middle frame 310 and a fastening block 320. In the first direction, the middle frame 310 and the fastening block 320 are respectively disposed on two opposite sides of the second portion 120. The middle frame 310 and the fastening block 320 are relatively fastened. The second portion 120 is mounted on the middle frame 310 and/or the fastening block 320.

It may be understood that the middle frame 310 in this application is not only used to fasten the second portion 120. In some other embodiments of this application, the middle frame 310 may be further integrated with another structure in the main body 300, for example, integrated with a component such as a mounting bracket configured to mount the speaker module 350. Similarly, the fastening block 320 in this application is not only used to fasten the second portion 120. In some other embodiments, the fastening block 320 may be further integrated with another structure in the main body 300. This is not specifically limited.

In the mobile phone 1, the main body 300 used to mount the second portion 120 in the cover 100 is provided as two parts: the middle frame 310 and the fastening block 320, thereby reducing difficulty of assembling the second portion 120 on the main body 300.

With reference to FIG. 18 and FIG. 19, it can be learned that, in some embodiments of this application, the middle frame 310 is connected to the fastening block 320, and a mounting groove 360 is formed at a joint surface between the middle frame 310 and the fastening block 320. The second portion 120 in the cover 100 is mounted in the mounting groove 360, and the second portion 120 is connected to a groove surface of the mounting groove 360. That is, the second portion 120 in the cover 100 is mounted on the middle frame 310 and/or the fastening block 320.

In some implementations, the second portion 120 in the cover 100 is bonded to the groove surface of the mounting groove 360. It may be understood that the foregoing implementation shows merely one manner of connecting the second portion 120 to the mounting groove 360. Another connection manner in which the second portion 120 can be mounted in the mounting groove 360 also falls within the protection scope of this application, for example, clamping and welding. This is not specifically limited in this application.

In some other embodiments of this application, the main body 300 is an integrated structure, the mounting groove 360 is provided on the integrated structure, and the second portion 120 in the cover 100 is mounted in the mounting groove 360.

With reference to FIG. 18 and FIG. 19, it can be learned that, in some embodiments of this application, the middle frame 310 includes a second side plate 311. In the first direction F₁, the second side plate 311, the first side plate 121, and the display component 200 are sequentially disposed. A first sound output gap is formed between the first side plate 121 and the second side plate 311, and the first sound output gap forms the second sound output subchannel 520. In addition, in the first direction F₁, the second side plate 311 blocks the sound outlet of the first sound output subchannel 510.

It may be understood that, in this application, that one component blocks another component means that an orthographic projection of one component on a plane covers an orthographic projection of another component on the plane. For example, that the second side plate 311 blocks the sound outlet of the first sound output subchannel 510 may be that an orthographic projection of the second side plate 311 on a plane covers an orthographic projection of the sound outlet of the first sound output subchannel 510 on the plane.

In the mobile phone 1, the second side plate 311 in the middle frame 310 is disposed, so that the sound outlet of the first sound output subchannel 510 can be blocked. This prevents the user from seeing the sound outlet of the first sound output subchannel 510 in another direction. For example, when the user looks at the mobile phone 1 in the first direction, the sound outlet of the first sound output subchannel 510 is invisible. Therefore, the user cannot see the internal structure of the mobile phone 1 through the sound outlet 501 of the sound output channel 500.

With reference to FIG. 18 and FIG. 19, it can be learned that, in some embodiments of this application, a third side plate surface 3111 of the second side plate 311 in the middle frame 310 is connected to a first fastening surface 321 in the fastening block 320.

In some embodiments of this application, the groove surface of the mounting groove 360 may include a fourth side plate surface 3112 of the second side plate 311 in FIG. 18, and may further include a second fastening surface 322 of the fastening block 320 in FIG. 18.

Still refer to FIG. 18 and FIG. 19. In some embodiments of this application, a first notch 370 is provided on a surface that is of the second side plate 311 and that is opposite to the first side plate 121, and the first notch 370 is aligned with the second sound output subchannel 520 in the first direction F₁.

Still refer to FIG. 18 and FIG. 19. In some implementations, the second side plate 311 includes a fourth side plate surface 3112, and the fourth side plate surface 3112 is opposite to the first side plate 121. The fourth side plate surface 3112 is a surface that is of the second side plate 311 and that is opposite to the first side plate 121. The first notch 370 is provided on the fourth side plate surface 3112.

In the mobile phone 1, the first notch 370 is provided on the second side plate 311, so that a size of the second sound output subchannel 520 is increased while processing difficulty and assembly difficulty are increased to a relatively small extent, thereby facilitating optimization of a sound effect of the mobile phone 1.

To improve stability of a relative position relationship between the cover 100 and the main body 300, in some embodiments of this application, a positioning block 380 is further disposed on the main body 300. For example, with reference to FIG. 16(a) and FIG. 18, the positioning block 380 is disposed on the fastening block 320 in the main body 300. A positioning slot 150 adapted to the positioning block 380 is formed on the second portion 120 in the cover 100. In an assembly state, the positioning block 380 in the main body 300 is located in the positioning slot 150 in the cover 100. In some other embodiments of this application, a positioning slot is further formed on the main body 300. A positioning block adapted to the positioning slot is disposed on the second portion 120 in the cover 100. In an assembly state, the positioning block in the cover 100 is located in the positioning slot in the main body 300.

In the mobile phone 1, the positioning block and the positioning slot are disposed between the main body 300 and the cover 100, so that accurate positioning of the main body 300 and the cover 100 is implemented, assembly difficulty of the mobile phone 1 is reduced, and stability of a relative position between the main body 300 and the cover 100 in the mobile phone 1 can be improved.

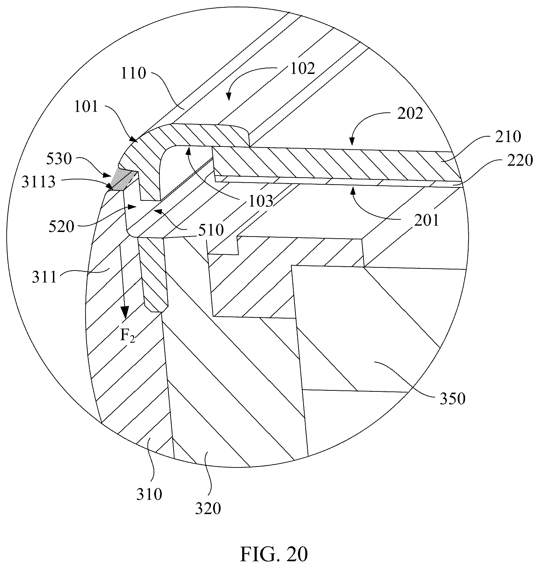

FIG. 20 is a partial enlarged view of the region S₇ in FIG. 14 according to some embodiments of this application, where a cross section of the third sound output subchannel 530 is marked. As shown in FIG. 20, in some embodiments of this application, in a second direction F₂, the first portion 110 of the cover 100 blocks the sound outlet of the second sound output subchannel 520. The second direction F₂ is perpendicular to the first projection surface. In addition, a second sound output gap is formed between the first portion 110 and the second side plate 311, and the second sound output gap forms the third sound output subchannel 530. In some implementations, with reference to FIG. 15 and FIG. 20, it can be learned that the direction F₀ is parallel to the second direction F₂.

In the mobile phone 1, the first portion 110 blocks the sound outlet of the second sound output subchannel 520, so that the first sound output subchannel 510 and the second sound output subchannel 520 are invisible from the outside, thereby further beautifying an appearance of the mobile phone 1.

To shield the gap between the display component 200 and the main body 300 by using the cover 100, it can be learned with reference to FIG. 14, FIG. 15, and FIG. 20 that, in some embodiments of this application, a part of the first portion 110 covers at least a part of the display component 200, and the other part extends through the first gap between the display component 200 and the main body 300 and covers the middle frame 310 in the main body 300.

Still refer to FIG. 16(a) and FIG. 20. In some embodiments of this application, a second notch 140 is provided on a surface that is of the first portion 110 and that is opposite to the second side plate 311, and the second notch 140 is aligned with the second sound output subchannel 520 in the second direction F₂. The second notch 140 and the second sound output gap jointly form the third sound output subchannel 530.

In the mobile phone 1, the second notch 140 is provided on the first portion 110, so that a size of the third sound output subchannel 530 is increased, and a communication path between the sound cavity 400 and the outside of the mobile phone 1 is expanded, thereby facilitating optimization of a sound effect of the mobile phone 1.

Still refer to FIG. 16(a), FIG. 16(b), FIG. 18, and FIG. 20. In some implementations, the first portion 110 includes a fourth cover surface 104, and the second side plate 311 in the middle frame 310 includes a fifth side plate surface 3113. In an assembly state, the fourth cover surface 104 is attached to the fifth side plate surface 3113. The fourth cover surface 104 is a surface that is of the first portion 110 and that is opposite to the second side plate 311. A third notch 140 is provided on the fourth cover surface 104.

To optimize a sound effect of the mobile phone 1, a channel between the sound cavity 400 and the outside of the mobile phone 1 may be set to a streamlined shape. Still refer to FIG. 15. In some embodiments of this application, a tilt angle and a rounded corner are set for a component (for example, the cover 100 and the main body 300) in the mobile phone 1 that forms the channel between the sound cavity 400 and the outside of the mobile phone 1. Details are not described herein. For example, in the cover 100, a position at which the first portion 110 and the second portion 120 are connected is designed into a rounded-angle structure. For another example, at the second notch 140 on the first portion 110, a surface of the second notch 140 slightly rises from the inside to the outside, to improve the sound effect of the mobile phone 1.

To reduce component molding difficulty and assembly difficulty of the mobile phone 1, in some embodiments of this application, a tilt angle is set for the component (for example, the cover 100 and the main body 300) in the mobile phone 1 that forms the channel between the sound cavity 400 and the outside of the mobile phone 1. Details are not described herein. For example, at the second notch 140 on the first portion 110, a surface of the second notch 140 slightly rises from the inside to the outside, to reduce drafting difficulty of the cover 100.

In addition, in some other embodiments of this application, the sound output channel 500 includes a first sound output subchannel 510 and a second sound output subchannel 520. For details about the first sound output subchannel 510 in this embodiment, refer to the first sound output subchannel 510 in the foregoing embodiments. For details about the second sound output subchannel 520 in this embodiment, refer to the second sound output subchannel 520 in the foregoing embodiments. However, it should be noted that a difference between this embodiment and the foregoing embodiments lies in that a sound outlet of the second sound output subchannel 520 in this embodiment directly communicates with the outside of the mobile phone 1.

In addition, this application further provides a cover 100. The cover 100 includes a first portion 110 and a second portion 120. The first portion 110 is configured to cover at least a part of an edge of a display component 200, and a plane on which the display component 200 is located is a first projection surface. The second portion 120 is located on a side that is of the first portion 110 and that faces the display component 200, and is connected to the first portion 110. The second portion 120 is connected to a main body 300. At least a part of a sound output channel 500 is provided on the cover 100, and the sound output channel 500 is configured to connect a sound cavity 400 on the main body 300 and the outside of the mobile phone 1. An orthographic projection of the sound output channel 500 on a second projection surface is greater than 0. The second projection surface is perpendicular to the first projection surface, and is parallel to an edge that is of the display component 200 and that corresponds to the sound output channel 500.

### Application scenario 2

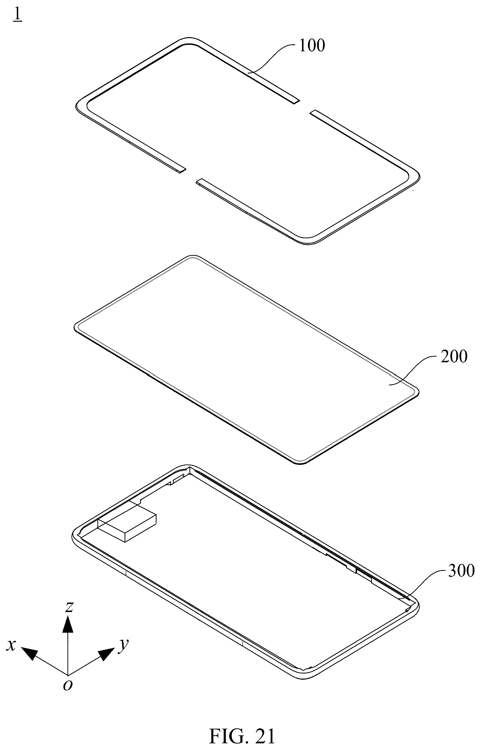

In the application scenario 2, a mobile phone is a non-foldable electronic device. This application further provides a mobile phone applicable to the application scenario 2. FIG. 21 is an exploded view of a mobile phone 1 according to some embodiments of this application. It can be learned by comparing FIG. 21 and FIG. 11 that, compared with those of the mobile phone in the application scenario 1, basic components of the mobile phone in the application scenario 1 change: The mobile phone 1 includes a cover 100, a display component 200, and a main body 300. However, structures of the cover 100, the display component 200, and the main body 300 and a mutual connection relationship are the same as those of the mobile phone 1 in the application scenario 1. That is, the cover 100 includes a first portion and a second portion. The display component 200 is supported on the main body 300. A plane on which the display component 200 is located is a first projection surface, the first portion of the cover 100 covers at least a part of the display component 200, and an orthographic projection of the first portion on the first projection surface at least partially overlaps an orthographic projection of an edge of the display component 200 on the first projection surface. The second portion extends from the first portion to the main body 300, and the second portion is mounted on the main body 300. The main body 300 internally includes a sound cavity, a sound output channel is provided on the cover 100, the sound output channel connects the sound cavity and the outside of the mobile phone, and an orthographic projection of the sound output channel on a second projection surface is greater than 0. The second projection surface is perpendicular to the first projection surface, and is parallel to an edge that is of the display component 200 and that corresponds to the sound output channel.

It may be understood that for details about other features of the mobile phone 1 in the application scenario 2, refer to the cover 100, the display component 200, and the main body 300 in the mobile phone 1 in the application scenario 1. Details are not described herein.

This application further provides a cover 100 applicable to the application scenario 2. The cover 100 includes a first portion and a second portion. The first portion is configured to cover at least a part of an edge of a display component 200, and a plane on which the display component 200 is located is a first projection surface. The second portion is located on a side that is of the first portion and that faces the display component 200, and is connected to the first portion. The second portion is connected to a main body. A sound output channel is provided on the cover, and the sound output channel is configured to connect a sound cavity on the main body and the outside of the mobile phone 1. An orthographic projection of the sound output channel on a second projection surface is greater than 0. The second projection surface is perpendicular to the first projection surface, and is parallel to an edge that is of the display component 200 and that corresponds to the sound output channel.

It should be noted that, in this specification, similar reference numerals and letters in the following accompanying drawings represent similar items. Therefore, once an item is defined in an accompanying drawing, the item does not need to be further defined or interpreted in subsequent accompanying drawings.

The foregoing describes implementations of this application in specific embodiments, and other advantages and effects of this application may be readily understood by a person skilled in the art from content disclosed in this specification. Although this application is described with reference to some embodiments, it does not mean that a feature of this application is only limited to this implementation. On the contrary, a purpose of describing this application with reference to an implementation is to cover another option or modification that may be derived based on the claims of this application. To provide an in-depth understanding of this application, the following descriptions include a plurality of specific details. This application may be alternatively implemented without using these details. In addition, to avoid confusion or blurring a focus of this application, some specific details are omitted from the descriptions. It should be noted that embodiments in this application and the features in embodiments may be mutually combined in the case of no conflict.

In the descriptions of this application, it should be noted that, orientations or position relationships indicated by terms such as "center", "up", "down", "left", "right", "vertical", "horizontal", "outer side", "inner side", "circumferential direction", "radial direction", and "axial direction" are based on the orientations or position relationships shown in the accompanying drawings, and are merely intended to describe this application and simplify the descriptions, but are not intended to indicate or imply that an indicated apparatus or element needs to have a specific orientation or be constructed and operated in a specific orientation, and therefore cannot be understood as a limitation on this application.

In the descriptions of this application, it should be noted that unless otherwise explicitly specified and limited, terms such as "dispose", "mount", "connect", and "attach" should be understood in a broad sense. For example, such terms may indicate a fixed connection, a detachable connection, or an integral connection, may indicate a mechanical connection or an electrical connection, and may indicate a direct connection, an indirect connection through an intermediate medium, or internal communication between two elements. A person of ordinary skill in the art may understand a specific meaning of the foregoing term in this application according to a specific situation.

It is clear that a person skilled in the art may make various modifications and variations to this application without departing from the spirit and the scope of this application. Thus, this application is intended to cover these modifications and variations, provided that they fall within the scope of the claims of this application and their equivalent technologies.

## Claims

1. An electronic device, wherein the electronic device comprises:
a main body (300), wherein the main body (300) comprises a support surface (301);
a display component (200), wherein the display component (200) is supported on the support surface (301) of the main body (300), and a plane on which the display component (200) is located is a first projection surface; and
a cover (100), wherein the cover (100) comprises a first portion (110) and a second portion (120) connected to the first portion (110), the first portion (110) covers at least a part of an edge of the display component (200), an orthographic projection of the first portion (110) on the first projection surface at least partially overlaps an orthographic projection of the edge of the display component (200) on the first projection surface, and the second portion (120) is formed by extending from the first portion (110) in a direction pointing to the main body (300) and is connected to the main body (300), wherein
the main body (300) internally comprises a sound cavity (400), a sound output channel (500) is enclosed by the cover (100) and/or the main body (300), a sound outlet (501) of the sound output channel (500) communicates with the outside of the electronic device, a sound inlet (502) of the sound output channel (500) communicates with the sound cavity (400), an area of an orthographic projection of the sound outlet (501) of the sound output channel (500) on a second projection surface is greater than 0, and the second projection surface is perpendicular to the first projection surface and is parallel to an edge that is of the display component (200) and that corresponds to the sound outlet (501) of the sound output channel (500).

2. The electronic device according to claim 1, wherein a ratio of an area of an orthographic projection of the sound outlet (501) of the sound output channel (500) on the first projection surface to the area of the orthographic projection of the sound outlet (501) of the sound output channel (500) on the second projection surface is a front-lateral proportion parameter, and the front-lateral proportion parameter is less than or equal to 1.

3. The electronic device according to claim 1 or 2, wherein the sound outlet (501) of the sound output channel (500) is provided on the cover (100) and the main body (300).

4. The electronic device according to claim 3, wherein the sound output channel (500) comprises a first sound output subchannel (510), the second portion (120) comprises a first side plate (121), the first side plate (121) is provided with a first through hole (130), the first through hole (130) communicates with the sound cavity (400), and the first through hole (130) forms the first sound output subchannel (510).

5. The electronic device according to claim 4, wherein the sound output channel (500) further comprises a second sound output subchannel (520), the second sound output subchannel (520) communicates with the first sound output subchannel (510), the display component (200) is located on one side of the first side plate (121) in a first direction, and the first direction is parallel to the first projection surface;
the main body (300) comprises a second side plate (311), and the second side plate (311) is located on the other side of the first side plate (121) in the first direction; and
a gap is formed between the first side plate (121) and the second side plate (311), the gap forms the second sound output subchannel (520), and the second side plate (311) blocks a sound outlet of the first sound output subchannel (510) in the first direction.

6. The electronic device according to claim 5, wherein a first notch (370) is provided on a surface that is of the second side plate and that is opposite to the first side plate, and the first notch (370) is aligned with the second sound output subchannel (520) in the first direction.

7. The electronic device according to claim 5 or 6, wherein the sound output channel (500) further comprises a third sound output subchannel (530), a gap is formed between the first portion (110) and the second side plate (311), the gap forms the third sound output subchannel (530), the first portion (110) blocks a sound outlet of the second sound output subchannel (520) in a second direction, and the second direction is perpendicular to the first projection surface.

8. The electronic device according to claim 7, wherein a second notch (140) is provided on a surface that is of the first portion (110) and that is opposite to the second side plate (311), and the second notch (140) is aligned with the second sound output subchannel (530) in the second direction.

9. The electronic device according to any one of claims 4 to 8, wherein the second portion (120) further comprises:
a reinforcing part (122), wherein the reinforcing part (122) is distributed in the first sound output subchannel (510), and is connected to opposite surfaces of the first sound output subchannel (510).

10. The electronic device according to any one of claims 1 to 6, wherein the sound outlet (501) of the sound output channel (500) is provided on the cover (100).

11. The electronic device according to claim 10, wherein a second through hole is provided on the first portion (110), and an opening of the second through hole forms the sound outlet (501) of the sound output channel (500).

12. The electronic device according to any one of claims 1 to 11, wherein the electronic device is a foldable electronic device.

13. The electronic device according to claim 12, wherein when the electronic device is in a flattened state and an intermediate state, the sound inlet (502) of the sound output channel (500) communicates with the sound cavity (400).

14. The electronic device according to claim 13, wherein the sound inlet (502) of the sound output channel (500) is provided on a surface that is of the second portion (120) and that faces the display component (200).

15. The electronic device according to claim 14, wherein an orthographic projection of the sound inlet (502) of the sound output channel (500) on the second projection surface at least partially does not overlap an orthographic projection of the display component (200) on the second projection surface.

16. A cover (100), wherein the cover (100) comprises:
a first portion (110), wherein the first portion (110) is configured to cover at least a part of an edge of a display component (200), and a plane on which the display component (200) is located is a first projection surface; and
a second portion (120), wherein the second portion (120) is located on a side that is of the first portion (110) and that faces the first portion (110), and is connected to the first portion (110), the second portion (120) is connected to a main body (300), the main body (300) internally comprises a sound cavity (400), at least a part of a sound output channel (500) is provided on the cover (100), the sound output channel (500) is used to connect the sound cavity (400) and the outside of an electronic device, an orthographic projection of the sound output channel (500) on a second projection surface is greater than 0, and the second projection surface is perpendicular to the first projection surface and parallel to an edge that is of the display component (200) and that corresponds to the sound output channel (500).
